# EUROPÄISCHE PATENTSCHRIFT

(11) **EP 2 719 563 B1**
(45) Veröffentlichungstag und Bekanntmachung des Hinweises auf die Patenterteilung: **29.03.2017**
(21) Anmeldenummer: 13185730.2
(22) Anmeldetag: 24.09.2013
(51) Int. Cl.: B60J 7/12

(54) **Dachspriegel**
Roof bow
Arceau de toit

(30) Priorität: 09.10.2012 DE 102012218387
(43) Veröffentlichungstag der Anmeldung: 16.04.2014
(73) Patentinhaber: Magna Car Top Systems GmbH, 74321 Bietigheim-Bissingen (DE)
(72) Erfinder: Kailasapathi, Shankar, 70199 Stuttgart (DE); Wössner, Thomas, 70439 Stuttgart (DE)
(74) Vertreter: Zangger, Bernd

(56) Entgegenhaltungen:
- WO-A1-2005/039908
- WO-A2-2005/084291

## Beschreibung

### Gebiet der Erfindung

Die vorliegende Erfindung betrifft einen Dachspriegel für ein Kraftfahrzeug mit einem Faltverdeck, wobei der Dachspriegel mit dem Faltdach, welches zwischen einer Schließstellung und einer Offenstellung bewegbar ist, verbindbar ist, wobei der Dachspriegel in Einbaulage quer zur Fahrtrichtung des Fahrzeugs verlauft. Die Erfindung betrifft weiters ein Verfahren zur Herstellung des Dachspriegels.

### Stand der Technik

Aus der DE 10153799 ist eine Achsstrebe oder ein Fahrwerkslenker bekannt, mit einem länglichen Grundkörper und mindestens zwei endständigen Lageraufnahmen zur Ein- und Ausleitung von Kräften, wobei der Grundkörper einen Verbund mindestens einer flachen Metalleinlage und einer die Restkontur bildenden Kunststoffstuktur aufweist, welche durch zumindest teilweises Umspritzen der Metalleinlage gebildet ist.

Bei dieser Lösung soll einerseits eine Gewichtsreduktion erreicht werden, andererseits bei einer Beschädigung solcher Bauteile ein sofortiger Totalverlust seiner Funktionalität vermieden werden.

Aus der DE3839855 sind Verbundwerkstoffe auf der Basis von Blech-/Kunststoffkombination im Automobilbau bekannt, jedoch handelt es sich bei den hier vorgeschlagenen Anwendungen um Strukturteile für Kraftfahrzeugtüren, Stoßfänger, Träger, Front- und Heckschalen bzw. Türschweller, wobei die durch die äußere Form bestimmenden Stahlblechteile durch Kunststoffverrippungen eine erhöhte Festigkeit bzw. Steifigkeit aufweisen sollen.

Die WO 2005/084291 A2 offenbart ein Verdeck für ein Fahrzeug mit einem Stapelgestänge mit einer rechten und einer linken Seite und einer Mehrzahl von Bögen, die sich quer zwischen den rechten und linken Seiten des oberen Stapelgestänges erstrecken.

Aus der WO 2005/039908 A1 ist ein Cabriolet-Fahrzeug bekannt mit einem Dach, das zumindest bereichsweise einen flexiblen Dachbezug aufweist, der von einem oder mehreren quer zur Fahrtrichtung liegenden Spriegel(n) untergriffen ist, wobei zumindest ein Spriegel mehrteilig ausgebildet ist und einen mit seitlichen Beschlägen verbundenen Mittelbereich umfasst, wobei zur Verbindung des Mittelteils und der Beschläge Befestigungsmittel vorgesehen sind, die bei geschlossenem Dach zumindest nahezu parallel zur Erstreckungsebene des äusseren Dachbezuges im Bereich des jeweiligen Spriegels liegen.

### Zusammenfassung der Erfindung

Es ist eine Aufgabe der Erfindung, einen Dachspriegel zu verbessern, so dass einerseits Kosten reduziert werden und andererseits eine Gewichtsreduktion erreicht wird.

Die Lösung der Aufgabe erfolgt durch einen Dachspriegel für ein Kraftfahrzeug mit einem Faltverdeck, wobei der Dachspriegel mit dem Faltdach, welches zwischen einer Schließstellung und einer Offenstellung bewegbar ist, verbindbar ist, wobei der Dachspriegel in Einbaulage quer zur Fahrtrichtung des Fahrzeugs verlauft, wobei der Dachspriegel aus einem ersten Bauteil, welches in Einbaulage im wesentlichen quer zur Fahrtrichtung des Fahrzeugs und zwei zweiten Bauteilen welche als Lenker ausgebildet sind, besteht, wobei das erste Bauteil zumindest aus einem ersten Material besteht und das zweite Bauteil aus einem zweiten, vom ersten Bauteil verschiedenen Material besteht, wobei das erste Bauteil aus Leichtmetall, bevorzugt Aluminium oder einer Aluminiumlegierung, besteht und das zweite Bauteil aus Stahl besteht, wobei das zweite Bauteil zumindest bereichsweise mit zumindest einem anderen Material umspritzt ist.

Diese Ausführung ermöglicht es, unterschiedliche Materialien, entsprechend der Anforderung und Belastung des Bauteils gezielt zu nutzen und eine erhebliche Gewichtsreduktion bei gleichzeitig hoher Festigkeit zu erreichen.

Unter "verschiedenen Materialen" wird hierbei verstanden, dass die jeweiligen Grundkörper der beiden Bauteile aus verschiedenen Materialien bestehen. Es ist jedoch möglich, dass in die Bauteile eingesetzte weitere Teile, welche beispielsweise eine Funktion bei der Verbindung oder Übertragung von Kräften erfüllen, ein gleiches oder ähnliches Grundmaterial aufweisen, wie das jeweils andere Bauteil.

Weiterbildungen der Erfindung sind in den abhängigen Ansprüchen, der Beschreibung sowie den beigefügten Zeichnungen angegeben.

Vorzugsweise umfasst der Dachspriegel ein erstes Bauteil, wobei das erste Bauteil als Hohlprofil ausgeführt ist. Das erste Bauteil kann dann entsprechend einer erforderlichen Länge abgeschnitten werden.

Das erste Bauteil weist eine Geometrie auf, dass es einem Faltverdeck einen Formverlauf gibt, welcher quer zur Fahrtrichtung des Fahrzeugs im wesentlichen bombiert ist.

Das erste Bauteil ist aus Leichtmetall, bevorzugt aus Aluminium oder einer Aluminiumlegierung, hergestellt.

Aluminium bietet den Vorteil, dass es wesentlich leichter als Stahl ist, und wird bevorzugt zur Herstellung von Strangpressprofilen eingesetzt, wodurch das erste Bauteil kostengünstig bei niedrigem Gewicht und ausreichender Steifigkeit hergestellt werden kann.
Alternativ zum Strangpressziehen ist es auch denkbar, dass die Herstellung des Hohlprofils durch ein anderes Verfahren, beispielsweise durch Innenhochdruckumformen (IHU), erfolgt.

Gemäß der Erfindung besteht das zweite Bauteil aus Stahl, wobei das zweite Bauteil zumindest bereichsweise mit zumindest einem anderen Material umspritzt ist. Als Kunststoff wird bevorzugt POM 15% PFTE verwendet. Es sind jedoch auch andere geeignete Kunststoffe verwendbar.

Das zweite Bauteil weist einen Stahlgrundkörper auf, welcher ein Biege-Stanzteil ist. Der Stahlgrundkörper ist dabei im wesentlichen ein Flachstahl, welcher entsprechend den Erfordernissen gefertigt wird.

Durch Biege-Stanzen kann das Bauteil in einfacher Weise geometrisch den Anforderungen angepasst werden. Die Geometrie des Bauteils ist dabei so ausgestaltet, dass es die auf das Bauteil wirkenden Kräfte ideal aufnehmen bzw. übertragen kann. So kann das zweite Bauteil beispielsweise eine L- Form aufweisen, welche zum späteren Verbinden mit dem ersten Bauteil vorteilhaft sein kann.

Zur Verbesserung der Steifigkeit kann der Stahlgrundkörper Sicken aufweisen. Dadurch werden die Steifigkeit des Stahlgrundkörpers einerseits und die Verbindung zwischen Metall- und Kunststoffstruktur andererseits verbessert. Des weiteren können zur Gewichtsersparnis und zur besseren Verbindung zwischen Metall und Kunststoff Aussparungen vorgesehen werden. Es ist auch denkbar, dass nur der Kunststoff Aussparungen aufweist.

Die Aussparungen erlauben es, dass das zweite Bauteil besonders gewichts- und formoptimiert kostengünstig hergestellt werden kann, ohne die Funktion des Bauteils zu beeinträchtigen.

Ein weiterer Vorteil von Kunststoffen besteht darin, dass es wesentlich einfacher ist relativ komplexe Strukturen zu gestalten, als dies bei einer reinen Metallstruktur möglich ist. Beispielsweise können mit Hilfe von Umspritzungen mit Kunststoff komplexe Formen mit großem Funktionsumfang hergestellt werden.

Das zweite Bauteil kann vorzugsweise ein Lenker sein, wie es im Stand der Technik für Faltverdecke bekannt ist. Lenker haben die Aufgabe einen Dachspriegel mit der Karosserie zu verbinden und sind ein Teil einer Dachkinematik, welche für das Öffnen und Schließen eines Faltverdecks erforderlich ist. Lenker werden links und rechts eines Dachspriegels angeordnet und sind beispielsweise mit einer weiteren Lenkeranordnung oder mit einer Führungsbahn der Dachkinematik, welche im festen Dachteil des Fahrzeugs angeordnet ist, verbunden.

Da sich das zweite Bauteil des Dachspriegels im verbauten Zustand im Bereich des Kopfaufschlags für Passagiere befindet, ist es erforderlich zum Schutz vor möglichen Kopfverletzungen in Folge eines Unfalls, entsprechende Radien an den Kanten der betroffenen Bauteile vorzusehen. Diese Radien werden als Kopfaufprallradien bezeichnet und müssen nach Gesetzen und Vorschriften (FMVSS 201 und ECE R-21) im Innenraum eines Kraftfahrzeugs zumindest 3mm betragen und bei der Umspritzung im Bereich der Hülse entsprechend berücksichtigt werden. Alternativ kann die Hülse so ausgeführt werden, dass die Geometrie der Hülse selbst den erforderlichen Kopfaufprallradius von zumindest 3mm aufweist.

Im Stahlgrundkörper kann auch eine Lageraufnahme vorgesehen werden, welche für eine Verbindung mit beispielsweise einer weiteren Lenkeranordnung erforderlich ist. Bevorzugt wird in die Lageraufnahme eine Hülse eingesetzt, welche zumindest an einer Seite einen Bund oder eine Verdickung aufweist. Da in diesem Bereich besonders hohe Kräfte auftreten können und eine Schwächung durch eine Freistellung für eine Lageraufnahme vorliegt, ist es vorteilhaft eine Hülse aus Stahl einzusetzen. Das zweite Bauteil kann dann mit der Lenkeranordnung durch die Hülse mittels beispielsweise eines Blindniets drehbar verbunden werden.

Die Hülse kann alternativ auch aus Aluminium oder einer Aluminiumlegierung bestehen.

In einer weiteren erfindungsgemäßen Ausführungsform wird das zweite Bauteil bereichsweise mit einem zweiten Kunststoff, bevorzugt PA6GF30, umspritzt. Es wird bevorzugt jener Bereich des zweiten Bauteils umspritzt, welcher in einem nachfolgenden Verfahren mit dem ersten Bauteil verbunden wird.

Die Umspritzung weist bevorzugt einen Fortsatz auf, welcher den Verlauf des ersten Bauteils, in Fahrzeugquerrichtung in Richtung Fahrzeugaußenseite, fortsetzt. Dadurch wird erreicht, dass das Faltverdeck fast über die gesamte Fahrzeugbreite einen harmonisch bombierten Verlauf aufweist.

Das zweite Bauteil ist als Rechts Teil und als Links Teil ausgeführt, wobei diese im wesentlichen spiegelbildlich ausgeführt sind.

Gemäß einer Ausführungsform der Erfindung werden das linke und das rechte zweite Bauteil mit dem ersten Bauteil verbunden. Das zweite Bauteil weist dabei im Bereich der zweiten Umspritzung eine Geometrie auf, welche es ermöglicht, das zweite Bauteil in das erste Bauteil einzuführen. Das zweite Bauteil weist dabei im Bereich der zweiten Umspritzung zumindest eine Vertiefung, welche im wesentlichen konisch ist, auf. Eine kerbenartige Vertiefung, welche im Stahlgrundkörper vor dem Umspritzen beim Biege-Stanzen vorgesehen wird ist in weiterer Folge zum formschlüssigen Verbinden des ersten Bauteils mit dem zweiten Bauteil von Vorteil. Beim Umspritzen des zweiten Bauteils mit PA6GF30 wird die zumindest eine kerbenartige Vertiefung so umspritzt, dass eine konische Vertiefung hergestellt wird. Bei einem anschließenden Verpressen des ersten Bauteils mit den zusammengefügten zweiten Bauteilen, in einer hierfür vorgesehenen Montagevorrichtung im Bereich der zumindest einen konischen Vertiefung, wird eine formschlüssige unlösbare Verbindung erreicht.

Die verwendeten Kunststoffe können neben dem homogenen Kunststoff auch Faserverstärkungen im Kunststoff aufweisen, wobei vorzugsweise Aramidfasern, Glasfasern oder Kohlefasern verwendet werden.

Zum Umspritzen des zweiten Bauteils wird das zweite Bauteil gemeinsam mit der Hülse, welche in den Stahlgrundkörper eingesetzt ist, in ein erstes Spritzgießwerkzeug eingelegt und zumindest bereichsweise mit einem ersten Kunststoff, bevorzugt mit POM 15% PFTE, umspritzt. Dadurch ist die Hülse verliersicher im Stahlgrundkörper des zweiten Bauteils angeordnet. POM 15% PFTE wird wegen seiner guten Gleiteigenschaften verwendet. Es nimmt außerdem fast keine Feuchtigkeit auf, wodurch der Werkstoff nicht aufquellen kann und die Funktion des Bauteils beeinträchtigen kann. Zwischen der Hülse und der Kunststoffumspritzung ist ein Losbrechmoment von <5Nm zulässig, nach dem Losbrechen ein Drehmoment von <1Nm. Diese Losbrechmomente sind erforderlich, damit, wenn der Dachspriegel im Kraftfahrzeug verbaut ist, eine relative Drehbewegung zwischen der Hülse und dem Stahlgrundkörper erfolgen kann, wenn im Kraftfahrzeug die Dachkinematik betätigt wird.

Das zweite Bauteil wird nach der ersten Umspritzung in ein weiteres Spritzgießwerkzeug eingelegt und zumindest bereichsweise mit einem zweiten Kunststoff, bevorzugt PA6GF30, umspritzt. Es wird bevorzugt PA verwendet, da es gegenüber POM 15% PFTE eine höhere Steifigkeit aufweist und kostengünstiger ist.

Der Stahlgrundkörper sollte, zur Vermeidung von Rissbildungen im Kunststoff, vor den Kunststoffumspritzungen entgratet werden.

Das erste Bauteil wird mit den zwei zweiten Bauteilen nach dem Umspritzen der zweiten Bauteile durch Verpressen dauerhaft verbunden. Dabei wird ein Umspritzungsbereich des zweiten Bauteils in das Hohlprofil des ersten Bauteils eingeführt. Die lose verbundenen Bauteile werden in eine Montagevorrichtung eingelegt und durch Verpressen des ersten Bauteils mit den zwei zweiten Bauteilen dauerhaft verbunden. Es wird eine Einheit gebildet, welche mit der Karosserie eines Kraftfahrzeugs verbunden werden kann.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines erfindungsgemäßen Dachspriegels.
- Fig. 2: zeigt das erste Bauteil, des erfindungsgemäßen Dachspriegels.
- Fig. 3: zeigt einen Stahlgrundkörper des zweiten Bauteils.
- Fig. 4: zeigt eine Hülse für einen Stahlgrundkörper.
- Fig. 5: zeigt die Hülse gemäß Fig. 4 im Stahlgrundkörper gemäß Fig. 3 eingesetzt.
- Fig.6: zeigt den Stahlgrundkörper mit Hülse gemäß Fig. 5 mit Kunststoff, im Bereich der Lageraufnahme, umspritzt.
- Fig. 7: zeigt das zweite Bauteil, des erfindungsgemäßen Dachspriegels.

### Detaillierte Beschreibung der Erfindung

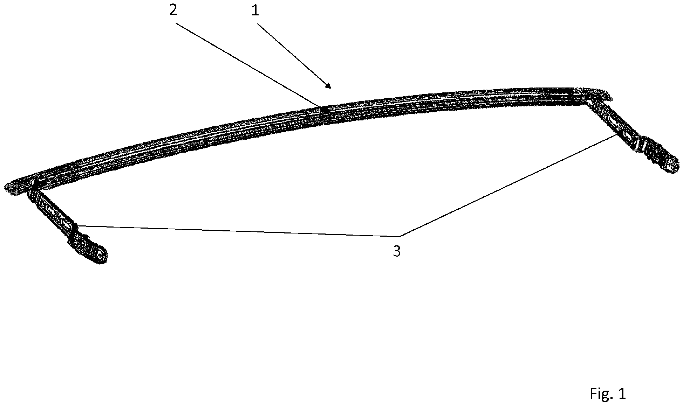

In Fig. 1 ist ein erfindungsgemäßer Dachspriegel 1 dargestellt, welcher im wesentlichen aus einem ersten Bauteil 2 und zwei zweiten Bauteilen 3 besteht, welche dauerhaft miteinander verbunden sind.

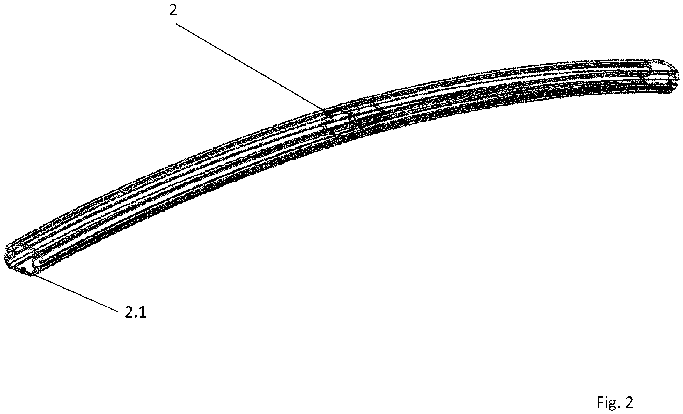

In Fig. 2 wird das erste Bauteil 1 dargestellt, welches im wesentlichen ein Hohlprofil 2.1 ist, das durch Strangpressziehen hergestellt wird. Das Hohlprofil 2.1 wird aus Leichtmetall, bevorzugt Aluminium oder eine Aluminiumlegierung, hergestellt. Es ist jedoch auch denkbar, das Hohlprofil 2.1 durch ein anderes Verfahren, beispielsweise durch Innenhochdruckumformen (IHU), herzustellen. Alternativ kann das Hohlprofil 2.1 auch aus Kunststoff hergestellt sein. Bei Kunststoffen werden bevorzugt auch Gießverfahren zur Herstellung angewendet.

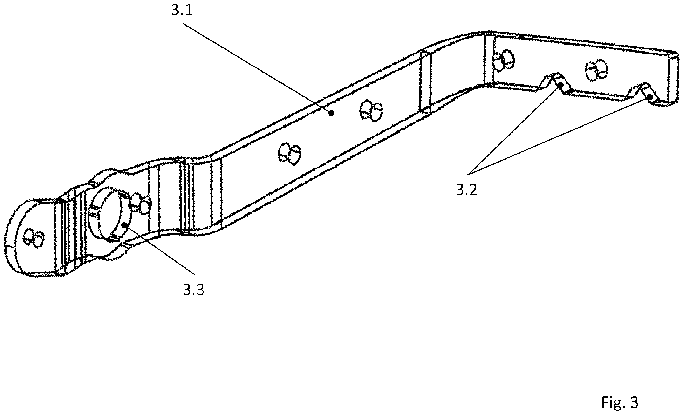

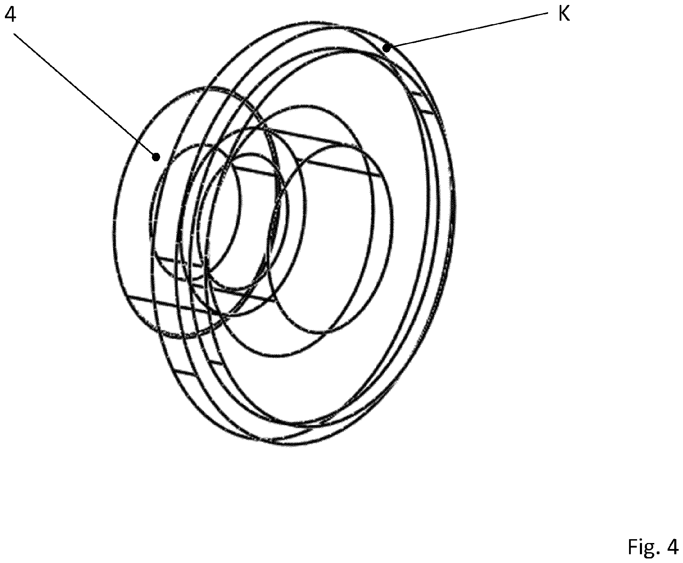

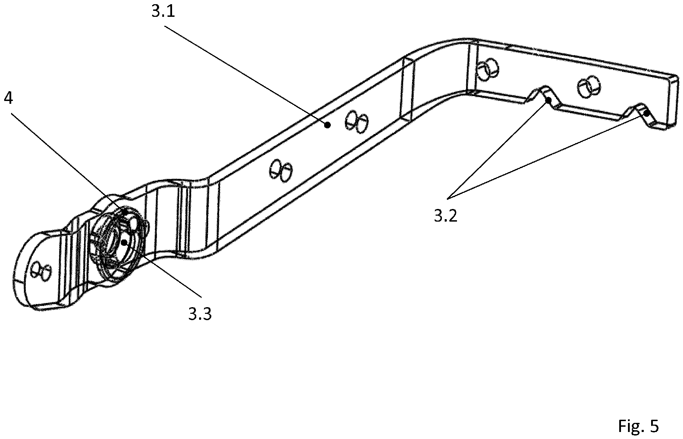

Fig. 3 zeigt einen Stahlgrundkörper 3.1 des zweiten Bauteils 3. Der Stahlgrundkörper 3.1 ist ein Biege-Stanzteil, und weist annähernd eine L-Form auf. Dabei ist in einem Bereich, welcher mit dem ersten Bauteil 2 verbunden werden kann, zumindest eine Einkerbung 3.2 vorgesehen, welche ein dauerhaftes Verbinden des ersten Bauteils 2 mit dem zweiten Bauteil 3 erlaubt. Der Stahlgrundkörper 3.1 weist auch eine Lageraufnahme 3.3 auf, in welche eine Hülse gemäß Fig.4 eingesetzt werden kann. Die Hülse 4 ist, aufgrund der hohen wirkenden Kräfte, aus Stahl und weist in zumindest einem Endbereich einen Bund K oder eine Verdickung auf. Der in Fig. 5 dargestellte Stahlgrundkörper 3.1 wird gemeinsam mit der Hülse 4 in ein erstes Spritzgießwerkzeug eingelegt und mit einem ersten Kunststoff umspritzt.

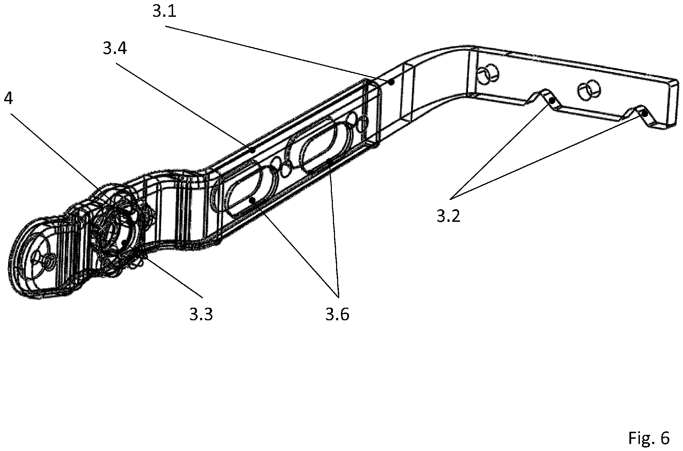

Fig. 6 zeigt den Stahlgrundkörper 3.1 mit der eingelegten Hülse 4 gemäß Fig. 5, wobei diese mit einer ersten Kunststoffumspritzung 3.4 umspritzt sind. Bevorzugt wird POM 15% PFTE verwendet, da der Teflon Anteil gute Gleiteigenschaften aufweist, welche bei Betätigung der Dachkinematik im verbauten Zustand des Dachspriegels aufgrund der geringeren Reibung von Vorteil ist. Aus Kosten und Gewichtsgründen kann die erste Kunststoffumspritzung 3.4 zumindest eine Aussparung 3.6 aufweisen. Ein weiterer Vorteil einer Aussparung 3.6 ist eine bessere Verbindung zwischen dem Stahlgrundkörper 3.1 und der ersten Kunststoffumspritzung 3.4.

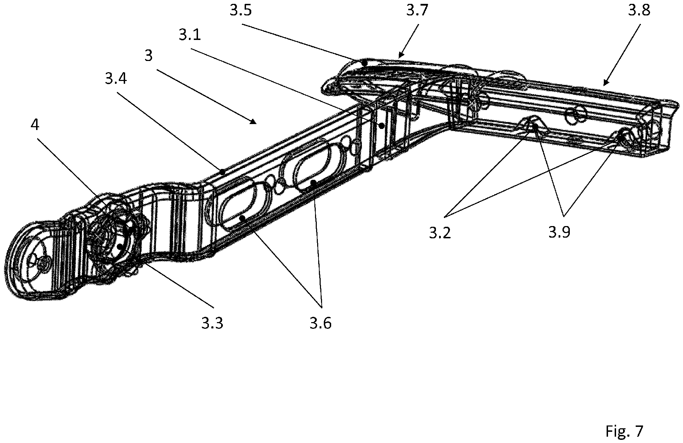

In Fig. 7 wird das fertig hergestellte zweite Bauteil 3 dargestellt. Der umspritzte Stahlgrundkörper 3.1 gemäß Fig. 6 ist mit einem zweiten Kunststoff umspritzt. Die zweite Kunststoffumspritzung 3.5 erfolgt vorzugsweise mit PA6GF30, da PA gegenüber POM eine höhere Festigkeit aufweist und da es kostengünstiger ist. Die zweite Kunststoffumspritzung 3.5 erfolgt in jenem Bereich, der mit dem ersten Bauteil 2 verbunden werden kann und weist einen Fortsatz 3.7 auf, welcher im wesentlichen den gleiche bombierten Verlauf wie das erste Bauteil 2 aufweist, wodurch die Bombierung über die fast gesamte Fahrzeugbreite erfolgen kann. Der Umspritzungsbereich 3.8 ist so ausgebildet, dass dieser in das Hohlprofil 2.1 des ersten Bauteils 2 einführbar ist. Die zweite Kunststoffumspritzung 3.5 weist zumindest eine konische Vertiefung 3.9 auf, welche zum Verpressen mit dem ersten Bauteil 2, für eine dauerhafte Verbindung, erforderlich ist. Das erste Bauteil 2 und die beiden zweiten Bauteile 3 werden in eine Montagevorrichtung eingelegt und durch Druckfügen miteinander verbunden.

### Bezugszeichenliste

- 1: Dachspriegel
- 2: erstes Bauteil
- 2.1: Hohlprofil
- 3: zweites Bauteil
- 3.1: Stahlgrundkörper
- 3.2: Einkerbung
- 3.3: Lageraufnahme
- 3.4: erste Kunststoffumspritzung
- 3.5: zweite Kunststoffumspritzung
- 3.6: Aussparungen
- 3.7: Fortsatz
- 3.8: Umspritzungsbereich
- 3.9: konische Vertiefung

- K: Bund

## Patentansprüche

1. Dachspriegel (1) für ein Kraftfahrzeug mit einem Faltverdeck, wobei der Dachspriegel (1) mit dem Faltdach, welches zwischen einer Schließstellung und einer Offenstellung bewegbar ist, verbindbar ist, wobei der Dachspriegel (1) in Einbaulage quer zur Fahrtrichtung des Fahrzeugs verlauft,wobei der Dachspriegel (1) aus einem ersten Bauteil (2), welches in Einbaulage im wesentlichen quer zur Fahrtrichtung des Fahrzeugs und zwei zweiten Bauteilen (3) welche als Lenker ausgebildet sind, besteht, wobei das erste Bauteil (2) zumindest aus einem ersten Material besteht und die zweiten Bauteile (3) aus einem zweiten, vom ersten Bauteil (2) verschiedenen Material bestehen,
**dadurch gekennzeichnet, dass**
das erste Bauteil (2) aus Leichtmetall, bevorzugt Aluminium oder einer Aluminiumlegierung, besteht und die zweiten Bauteile (3) aus Stahl bestehen, wobei die zweiten Bauteile (3) zumindest bereichsweise mit zumindest einem anderen Material umspritzt sind.

2. Dachspriegel (1) für ein Kraftfahrzeug nach Anspruch 1,
**dadurch gekennzeichnet, dass** das erste Bauteil (2) ein Hohlprofil (2.1) aufweist, wobei das Hohlprofil (2.1) dem Faltverdeck einen Formverlauf gibt, welcher quer zur Fahrtrichtung des Fahrzeugs bombiert ist.

3. Dachspriegel (1) für ein Kraftfahrzeug nach Anspruch 2,
**dadurch gekennzeichnet, dass** das Hohlprofil (2.1) durch Strangpressziehen hergestellt ist.

4. Dachspriegel für ein Kraftfahrzeug nach Anspruch 1,
**dadurch gekennzeichnet, dass** jedes der zweiten Bauteile (3) einen Stahlgrundkörper (3.1) aufweist, wobei der Stahlgrundkörper (3.1) ein Biege-Stanzteil ist.

5. Dachspriegel (1) für ein Kraftfahrzeug nach Anspruch 4,
**dadurch gekennzeichnet , dass** in den Stahlgrundkörper (3.1) eine Hülse (4) eingesetzt ist.

6. Dachspriegel (1) für ein Kraftfahrzeug nach Anspruch 4,
**dadurch gekennzeichnet, dass** der Stahlgrundkörper (3.1) bereichsweise mit einem ersten Kunststoff umspritzt ist.

7. Dachspriegel (1) für ein Kraftfahrzeug nach den Ansprüchen 2 und 4,
**dadurch gekennzeichnet, dass** der Stahlgrundkörper (3.1) bereichsweise mit einem zweiten Kunststoff umspritzt ist, wobei die Umspritzung einen Fortsatz (3.7) aufweist welcher im wesentlichen der Form und dem Verlauf der Bombierung des ersten Bauteils (2) entspricht.

8. Dachspriegel (1) für ein Kraftfahrzeug nach Anspruch 1,
**dadurch gekennzeichnet, dass** die zwei zweiten Bauteile (3) als linkes und als rechtes Bauteil ausgeführt sind, wobei das rechte Bauteil spiegelbildlich zum linken Bauteil ausgeführt ist.

9. Dachspriegel (1) für ein Kraftfahrzeug nach Anspruch 8,
**dadurch gekennzeichnet, dass** das linke und das rechte zweite Bauteil (3) mit dem ersten Bauteil (2) durch Verpressen, bevorzugt Druckfügen, verbunden ist.

10. Verfahren zur Herstellung eines Dachspriegels (1) nach Anspruch 1,
wobei die zwei zweiten Bauteile (3) jeweils einen Umspritzungsbereich (3.8), und das erste Bauteil (2) ein Hohlprofil (2.1) aufweisen, **gekennzeichnet durch** die Schritte: die Umspritzungsbereiche (3.8) werden in das Hohlprofil (2.1) des ersten Bauteils (2) eingeführt, die Bauteile werden in eine Montagevorrichtung eingelegt, die Bauteile werden **durch** Verpressen, an zumindest einer konischen Vertiefung (3.9) des zweiten Bauteils (3), dauerhaft miteinander verbunden.

## Claims

1. Roof bow (1) for a motor vehicle having a folding top, wherein the roof bow (1) can be connected to the folding roof which can be moved between a closed position and an open position, wherein the roof bow (1), when installed, runs perpendicular to the direction of motion of the vehicle, wherein the roof bow (1) consists of a first component (2) which, when installed, is essentially perpendicular to the direction of motion of the vehicle and two second components (3) which are designed as links, wherein the first component (2) consists at least of a first material and the second components (3) consist of a second material different from the first component (2), **characterized in that** the first component (2) is made of a light metal, preferably aluminium or an aluminium alloy, and the second components (3) are made of steel, wherein at least one other material is injection-moulded onto the second components (3), at least in certain regions.

2. Roof bow (1) for a motor vehicle according to Claim 1, **characterized in that** the first component (2) has a hollow profile (2.1), wherein the hollow profile (2.1) gives the folding top a profile which is curved perpendicular to the direction of motion of the vehicle.

3. Roof bow (1) for a motor vehicle according to Claim 2, **characterized in that** the hollow profile (2.1) is produced by pultrusion.

4. Roof bow (1) for a motor vehicle according to Claim 1, **characterized in that** each one of the second components (3) has a steel body (3.1), wherein the steel body (3.1) is a bent and stamped part.

5. Roof bow (1) for a motor vehicle according to Claim 4, **characterized in that** a sleeve (4) is inserted into the steel body (3.1).

6. Roof bow (1) for a motor vehicle according to Claim 4, **characterized in that** a first polymer is injection-moulded onto certain regions of the steel body (3.1).

7. Roof bow (1) for a motor vehicle according to Claims 2 and 4, **characterized in that** a second polymer is injection-moulded onto certain regions of the steel body (3.1), wherein the injection-moulding has a projection (3.7) which essentially matches the shape and profile of the curvature of the first component (2).

8. Roof bow (1) for a motor vehicle according to Claim 1, **characterized in that** the two second components (3) are designed as a left-hand and a right-hand component, wherein the right-hand component is a mirror image of the left-hand component.

9. Roof bow (1) for a motor vehicle according to Claim 8, **characterized in that** the left-hand and right-hand second components (3) are connected to the first component (2) by pressing, preferably press-joining.

10. Method for producing a roof bow (1) according to Claim 1, wherein the two second components (3) each have an injection-moulded region (3.8), and the first component (2) has a hollow profile (2.1), **characterized by** the following steps: the spray regions (3.8) are inserted into the hollow profile (2.1) of the first component (2), the components are introduced into an assembly device, the components are permanently connected to one another by pressing, at at least one conical depression (3.9) of the second component (3).

## Revendications

1. Arceau de toit (1) pour un véhicule à moteur avec une capote repliable, dans lequel l'arceau de toit (1) peut être assemblé au toit pliant, qui est déplaçable entre une position fermée et une position ouverte, dans lequel l'arceau de toit (1) s'étend en position montée transversalement à la direction de marche du véhicule, dans lequel l'arceau de toit (1) se compose d'une première pièce (2), qui en position montée est placée essentiellement transversalement à la direction de marche du véhicule et de deux deuxièmes pièces (3) qui sont réalisées en forme de bielles, dans lequel la première pièce (2) se compose au moins d'un premier matériau et les deuxièmes pièces (3) se composent d'un deuxième matériau différent de la première pièce (2), **caractérisé en ce que** la première pièce (2) se compose de métal léger, de préférence d'aluminium ou d'un alliage d'aluminium, et les deuxièmes pièces (3) se composent d'acier, dans lequel les deuxièmes pièces (3) sont enrobées par injection, au moins localement avec au moins un autre matériau.

2. Arceau de toit (1) pour un véhicule à moteur selon la revendication 1, **caractérisé en ce que** la première pièce (2) présente un profilé creux (2.1), dans lequel le profilé creux (2.1) donne à la capote repliable une allure de forme qui est bombée transversalement à la direction de marche du véhicule.

3. Arceau de toit (1) pour un véhicule à moteur selon la revendication 2, **caractérisé en ce que** le profilé creux (2.1) est fabriqué par filage à la presse.

4. Arceau de toit pour un véhicule à moteur selon la revendication 1, **caractérisé en ce que** chacune des deuxièmes pièces (3) présente un corps de base en acier (3.1), dans lequel le corps de base en acier (3.1) est une pièce produite par pliage et découpage.

5. Arceau de toit (1) pour un véhicule à moteur selon la revendication 4, **caractérisé en ce qu'**une douille (4) est insérée dans le corps de base en acier (3.1).

6. Arceau de toit (1) pour un véhicule à moteur selon la revendication 4, **caractérisé en ce que** le corps de base en acier (3.1) est enrobé par injection localement avec une première matière plastique.

7. Arceau de toit (1) pour un véhicule à moteur selon les revendications 2 et 4, **caractérisé en ce que** le corps de base en acier (3.1) est enrobé par injection localement avec une deuxième matière plastique, dans lequel l'enrobage présente un prolongement (3.7), qui correspond essentiellement à la forme et à l'allure du bombage de la première pièce (2).

8. Arceau de toit (1) pour un véhicule à moteur selon la revendication 1, **caractérisé en ce que** les deux deuxièmes pièces (3) sont réalisées en forme de pièces gauche et droite, dans lequel la pièce droite est la symétrique de la pièce gauche.

9. Arceau de toit (1) pour un véhicule à moteur selon la revendication 8, **caractérisé en ce que** la deuxième pièce gauche et la deuxième pièce droite (3) sont reliées à la première pièce (2) par pressage, de préférence par assemblage par pression.

10. Procédé de fabrication d'un arceau de toit (1) selon la revendication 1, dans lequel les deux deuxièmes pièces (3) présentent chacune une zone d'enrobage par injection (3.8) et la première pièce (2) un profilé creux (2.1), **caractérisé par** les étapes suivantes: on introduit les zones d'enrobage par injection (3.8) dans le profilé creux (2.1) de la première pièce (2), on dépose les pièces dans un dispositif de montage, on assemble les pièces durablement les unes aux autres par pressage, à au moins un creux conique (3.9) de la deuxième pièce (3).
